(19) Europäisches Patentamt
European Patent Office
Office européen des brevets

(11) Veröffentlichungsnummer: **0 490 255 A1**

## (12) EUROPÄISCHE PATENTANMELDUNG

(21) Anmeldenummer: **91120842.9**

(22) Anmeldetag: **04.12.91**

(51) Int. Cl.⁵: **C10M 159/24**, C09D 5/08, C23F 11/16

(30) Priorität: **07.12.90 DE 4039033**

(43) Veröffentlichungstag der Anmeldung:
**17.06.92 Patentblatt 92/25**

(84) Benannte Vertragsstaaten:
**DE ES FR IT**

(71) Anmelder: **HOECHST AKTIENGESELLSCHAFT**
**Postfach 80 03 20**
**W-6230 Frankfurt am Main 80(DE)**

(72) Erfinder: **Studeneer, Adolf, Dr.**
**Hölderlinstrasse 52**
**W-6233 Kelkheim(Ts)(DE)**
Erfinder: **Fossati, Franco, Dr.**
**Vittorio Veneto 23**
**I-10070 Robassomero(IT)**
Erfinder: **Eife, Karl-Heinz**
**Waldschulstrasse 140**
**W-6000 Frankfurt/Main(DE)**

(54) **Verfahren zur Herstellung von Calciumsulfonat/-Calcium-carbonat-Komplexen.**

(57) Bei dem Verfahren zur Herstellung von überbasischen Calciumsulfonat/Calciumcarbonat-Komplexen wird eine Mischung aus
- öllöslichen Aralkylsulfonsäuren,
- Calciumoxid und/oder Calciumhydroxid, sowie
- Carbonsäuren,
  in Gegenwart von einem flüssigen unpolaren Reaktionsmedium, wasserlöslichen polaren Lösungsvermittler und Wasser umgesetzt.

Anschließend erfolgt die Reaktion mit Kohlendioxid. Als Carbonsäuren werden mit Wasser nicht mischbare oder wasserunlösliche Carbonsäuren eingesetzt. Die Verfahrensprodukte finden Verwendung als Korrosionsschutzmittel.

EP 0 490 255 A1

Die Erfindung bezieht sich auf ein Verfahren von der im Oberbegriff des Anspruchs 1 genannten Art. Ein solches Verfahren ist aus der GB-B-2,146,348 bekannt geworden. Die erhaltenen Produkte sind öllösliche überbasische Calciumsulfonat-Calciumcarbonat-Komplexe. Die Erfindung betrifft auch die Verwendung dieser Produkte.

Bei dem Verfahren der britischen Patentschrift werden in einem flüssigen unpolaren Reaktionsmedium öllösliche Aralkylsulfonsäuren mit einem stöchiometrischen Überschuß an basischen Calciumverbindungen neutralisiert. Bei dieser Reaktion sind im Reaktionsmedium außerdem noch aliphatische Carbonsäuren mit 1 bis 4-C-Atomen oder Benzoesäure, vorzugsweise aber Essigsäure, sowie niedrige aliphatische Alkohole und/oder Alkoxyalkanole, insbesondere Monomethylether von Ethylenglykol, vorhanden. Die nach der Neutralisation noch vorhandenen, überschüssigen basischen Calciumverbindungen werden durch Einleiten von Kohlendioxid zu Calciumcarbonat umgesetzt. Hierbei entsteht der gewünschte überbasische Sulfonat/Carbonat-Komplex. Die Abtrennung nicht umgesetzter basischer Calciumverbindungen erfolgt durch Filtration und die flüchtigen Anteile der Reaktionsmischung durch Destillation. Gerade dieser letzte Schritt der Reinigung des Produktes von den unerwünschten Begleitstoffen ist häufig sehr problematisch und verfahrenstechnisch sehr aufwendig. Die filtrierten Produkte zeigen häufig nicht reproduzierbare, schwankende Eigenschaften, so daß sie für die kommerzielle Weiterverarbeitung unbrauchbar sind.

Das Verfahrensprodukt dient als Ausgangskomponente zur Herstellung von Schmieröladditiven und als Rohstoff zur Herstellung von Korrosionsschutzmitteln für den Bereich Hohlraumkonservierung und Unterbodenschutz an z.B. Straßenfahrzeugen. Hierbei werden diese Sulfonat/Carbonat-Komplexe häufig mit Erdalkalimetall-Derivaten von aliphatischen Carbonsäuren, die selbst Korrosionsschutzmittel darstellen, gemischt, um ihre Wirkung zu verstärken. Die Herstellung dieser als Korrosionsschutzmittel brauchbaren Mischungen bedeutet einen zusätzlichen Schritt bei der Verarbeitung der Calciumsulfonat/Calciumcarbonat-Komplexe, außerdem müssen die Erdalkalimetall-Derivate der aliphatischen Carbonsäuren zuvor gesondert hergestellt werden.

Es ist somit die Aufgabe der Erfindung, das bekannte Verfahren dahingehend zu verbessern, daß das Verfahrensprodukt von den Begleitstoffen problemlos abgetrennt werden kann. Ferner soll das erhaltene Verfahrensprodukt verbesserte Wirkung bei der Verwendung als Korrosionsschutzmittel aufweisen, so daß die nachfolgende Mischung mit Erdalkalimetall-Derivaten von aliphatischen Carbonsäuren entfallen kann.

Diese Aufgabe wird erfindungsgemäß dadurch gelöst, daß die bei dem bekannten Verfahren in der Reaktionsmischung vorhandenen wasserlöslichen oder wassermischbaren Carbonsäuren durch höhere, nicht mit Wasser mischbare und in Wasser praktisch unlösliche Carbonsäuren ersetzt werden.

Gegenstand der Erfindung ist somit das Verfahren mit den in Anspruch 1 genannten Merkmalen, die abhängigen Ansprüche geben zweckmäßige Ausführungsformen des Verfahrens an. Der jeweilige Anteil der Einzelkomponenten, mit Ausnahme der erfindungswesentlichen wasserunlöslichen bzw. in Wasser nicht mischbaren Carbonsäuren, entspricht den im Stand der Technik beschriebenen Mengen, wenn auch die nachstehend angegebenen Anteilmengen für die vorliegende Erfindung besonders vorteilhaft sind.

Die erfindungsgemäß eingesetzten Carbonsäuren sind natürliche oder synthetische Fettsäuren und besitzen mindestens 8, vorzugsweise 8 bis 24 C-Atome. Sie liegen im allgemeinen in Form einer Mischung vor. Auch wasserunlösliche, mit Wasser nicht mischbare aromatische Carbonsäuren, wie z.B. Naphthalincarbonsäuren, sind geeignet. Vorzugsweise werden Paraffincarbonsäuren eingesetzt, die durch katalytische Oxidation von Petrochemikalien oder Polyethylenwachs hergestellt werden, erstere sind unter der Bezeichnung oxidiertes Petrolat bekannt. Geeignete Carbonsäuren sind beispielsweise auch ungesättigte Fettsäuren, wie Ölsäure, und Aminosäuren, wie Oleylaminoessigsäure. Der Anteil der wasserunlöslichen bzw. mit Wasser nicht mischbaren Carbonsäuren beträgt im allgemeinen mehr als 2, insbesondere 2,5 bis 15 Gew.-%, bezogen auf die Aralkylsulfonsäuren, kann jedoch auch bis zu 50 % betragen.

Bei dem Verfahren der Erfindung werden zunächst die Bestandteile der Reaktionsmischung miteinander vermischt, wobei die Säuren bei Raumtemperatur durch einen Überschuß an basischen Calciumverbindungen neutralisiert werden, und danach mit Kohlendioxid bei erhöhter Temperatur beaufschlagt. Der gesamte Verfahrensablauf kann somit in einem einzigen Reaktionsbehälter, d.h. einstufig erfolgen.

Die Neutralisierung der Sulfonsäuren und Carbonsäuren findet statt in einem flüssigen unpolaren Reaktionsmedium, z.B. in Form von flüssigen Kohlenwasserstoffen, Ölen z.B. Mineralöl oder in Mischungen dieser Verbindungen, wobei zur Beschleunigung der Neutralisationsreaktion ein polarer Lösungsvermittler zugesetzt wird.

Die öllöslichen Aralkylsulfonsäuren bestehen aus einem aromatischen Kern, z.B. Naphthalin oder Phenanthren, insbesondere aber einem Benzolkern, mit wenigstens einer $SO_3H$-Gruppe und ein oder zwei geradkettigen oder verzweigten Alkylresten, wie sie z.B. in den US-Patenten 3,342,079; 3,372,115; 3,492,831; 3,746,643 und 3,816,310 beschrieben sind. Diese Verbindungen sind auch unter der Bezeichnung öllösliche Erdölsulfonsäuren oder Petrolsulfonsäuren bekannt. Die Aralkylsulfonsäuren werden dem flüssigen unpolaren Reaktionsmedium unter Rühren zugegeben, gleichzeitig, vorher und/oder danach wird das zur Neutralisation der Aralkylsulfonsäuren und der Carbonsäuren erforderliche Calciumoxid und/oder Calciumhydroxid ("Weißkalkhydrat") im Überschuß hinzugefügt. Die Menge an basischer Calciumverbindung ist mehr als doppelt so groß wie die zur Neutralisation der Sulfon- und Carbonsäuren erforderliche Menge.

Nach einer Nachrührzeit von 15 bis 30 Minuten erfolgt die Zugabe von Wasser und des polaren Lösungsvermittlers in Form von wasserlöslichen oder wassermischbaren aliphatischen Alkoholen, vorzugsweise $C_1$-$C_4$-Alkanolen, oder von wasserlöslichen oder wassermischbaren Alkoxyalkanolen, insbesondere wasserlöslichen Monoalkylether eines wasserlöslichen Glykols, wie z.B. Monomethyl- oder Monoethylether von Ethylenglykol (Methylglykol, Ethylglykol). Der Anteil des polaren Lösungsvermittlers beträgt im allgemeinen 3 bis 15 Gew.`%, bezogen auf das flüssige unpolare Reaktionsmedium. Der Anteil des Wassers ist dagegen im allgemeinen geringer als der Anteil des polaren Lösungsvermittlers und beträgt gewöhnlich 1 bis 15 Gew.-%, bezogen auf den polaren Lösungsvermittler.

Anschließend werden dem Reaktionsgemisch noch die erfindungswesentlichen, nicht mit Wasser mischbaren bzw. nicht in Wasser löslichen Carbonsäuren zugesetzt. Die Zugabe dieser Komponente kann auch vor, gleichzeitig oder anschließend mit den Aralkylsulfonsäuren erfolgen. Da die Carbonsäuren bei Raumtemperatur fest sind, werden sie gewöhnlich erst durch Schmelzen verflüssigt und in dieser Form dem Reaktionsgemisch zugeführt. Die Carbonsäuren werden wie die Aralkylsulfonsäuren durch das Calciumoxid bzw. Calciumhydroxid neutralisiert und in die entsprechenden Calciumsalze überführt.

Die Neutralisationsreaktionen erfolgen zweckmäßigerweise bei Raumtemperatur, d.h. bei 15 bis 30°C.

Nach der Neutralisation der Sulfon- und der Carbonsäuren wird zur Neutralisation und Solubilisierung von überschüssigen basischen Calciumverbindungen die Carbonatisierung durchgeführt. Hierzu wird gewöhnlich $CO_2$ gasförmig in die auf 30 bis 95, insbesondere 40 bis 70°C erwärmte Reaktionsmischung eingeleitet. Im allgemeinen ist es ausreichend, wenn pro Mol Calcium nicht mehr als 1 Mol $CO_2$ zugesetzt wird, die Mindestmenge $CO_2$ beträgt 0,7 Mol bezogen auf 1 Mol Ca.

Das Verfahrensprodukt ist ein Komplex von überbasischem Calciumaralkylsulfonaten, Calciumcarbonat und Calciumcarboxylat und liegt in einem organischen polaren/unpolaren Lösungsmittelgemisch vor. Der gemessene Ca-Gehalt ist größer als der stöchiometrisch ermittelte. Die Feststoffteilchen aus nichtumgesetzten basischen Calciumverbindungen sowie anderen Verunreinigungen lassen sich durch ein geeignetes Klärfilter, Maschenweite z.B. 200 bis 400 $\mu$m, problemlos entfernen. Das im organischen Lösungsmittelgemisch gelöste oder fein dispergierte Verfahrensprodukt wird durch teilweise oder weitgehend vollständige destillative Entfernung der Lösungsmittel in konzentrierter Form erhalten.

Das Produkt zeigt den Vorteil, daß es problemlos in konzentrierter Form gewonnen wird und als Korrosionsverhinderer ohne weiteren Zusatz von Ca-Carboxylat eingesetzt werden kann. Es ist insbesondere für die Hohlraumkonservierung und als Unterbodenschutz für Straßenfahrzeuge geeignet.

Die Erfindung wird durch die nachstehenden Beispiele näher erläutert:

Beispiel 1

In einem Rührbehälter werden die folgenden Komponenten zur Umsetzung gebracht:

| | |
|---|---|
| 2 500 kg | Kohlenwasserstoffgemisch (Kp. 150-200°C) |
| 1 720 kg | Petrolsulfonsäure (öllösliche Erdölsulfonsäuren) |
| 999 kg | Calciumhydroxid |
| 287 kg | Methylglykol |
| 267 kg | Wasser |
| 172 kg | Oxidiertes Petrolat (wasserunlösliche Carbonsäuren) |
| 470 kg | Kohlendioxidgas. |

Zunächst wird bei Raumtemperatur das Kohlenwasserstoffgemisch vorgelegt und die vorgegebenen Mengen an Petrolsulfonsäure und Calciumhydroxid eingetragen.

Nach einer Nachrührzeit von 20 Minuten wird bei Umgebungstemperatur das Methylglykol sowie das Wasser zugegeben.

Das geschmolzene oxidierte Petrolat wird ebenfalls zugesetzt und anschließend bei 50 - 60°C die angegebene Menge $CO_2$ innerhalb 2 bis 3 Stunden in die Reaktionsmischung eingeleitet.

Nach beendeter Gaseinleitung wird über ein 300 $\mu$m Sieb in einen zweiten Reaktor filtriert. Das resultierende Filtrat wird schließlich bei leichtem Vakuum durch Destillation von den flüchtigen Lösemitteln

3

(Kohlenwasserstoffe, Methylglykol) befreit.

Es resultieren 5 250 kg eines ca. 20 Gew.-% Wirkstoff enthaltenden Produktes mit einer TBN (total basic number) von mind. 230 mg KOH/g (ASTMD 2 896).

Beispiel 2

Es kommen in analoger Weise, wie in Beispiel 1 beschrieben, folgende Mengen zum Einsatz

| 2 400 kg | Kohlenwasserstoffgemisch (Kp. 150-200 ° C) |
| 1 660 kg | Petrolsulfonsäure |
| 1 030 kg | Calciumhydroxid |
| 558 kg | Methylglykol |
| 257 kg | Wasser |
| 147 kg | Oxidiertes Petrolat |
| 440 kg | Kohlendioxidgas. |

Es resultieren 5 800 kg eines Gemisches mit 20 Gew.-% Aktivgehalt einer TBN von 217, einem Trockengehalt von 93 Gew.-% und einem Flammpunkt von 73 ° C.

**Patentansprüche**

1.  Verfahren zur Herstellung von überbasischen Calciumsulfonat/Calciumcarbonat-Komplexen durch Umsetzung einer Mischung aus
    - öllöslichen Aralkylsulfonsäuren,
    - Calciumoxid und/oder Calciumhydroxid, sowie
    - Carbonsäuren,
      in Gegenwart von einem flüssigen unpolaren Reaktionsmedium, wasserlöslichen polaren Lösungsvermittler und Wasser,
    und anschließende Reaktion mit Kohlendioxid, dadurch gekennzeichnet, daß als Carbonsäuren mit Wasser nicht mischbare oder wasserunlösliche Carbonsäuren eingesetzt werden.

2.  Verfahren nach Anspruch 1, dadurch gekennzeichnet, daß die Carbonsäuren aus natürlichen oder synthetischen, verzweigten oder unverzweigten, gesättigten oder ungesättigten aliphatischen Fettsäuren oder einem Fettsäuregemisch mit mindestens 8, insbesondere 8 bis 24 C-Atomen bestehen.

3.  Verfahren nach Anspruch 1 oder 2, dadurch gekennzeichnet, daß die Carbonsäuren aus aromatischen Carbonsäuren, insbesondere Naphthalincarbonsäuren, gegebenenfalls im Gemisch mit den Carbonsäuren des Anspruchs 2, bestehen.

4.  Verfahren nach einem der Ansprüche 1 bis 3, dadurch gekennzeichnet, daß die Carbonsäuren Aminosäuren umfassen, gegebenenfalls im Gemisch mit den Carbonsäuren nach Anspruch 2 und/oder 3.

5.  Verwendung der Verfahrensprodukte nach Anspruch 1 als Korrosionsschutzmittel.

Europäisches Patentamt

**EUROPÄISCHER RECHERCHENBERICHT**

Nummer der Anmeldung

EP 91 12 0842

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,X | US-A-3 372 115 (R.L.MCMILLEN)<br>* Spalte 7-8; Beispiele 9-12 *<br>* Spalte 10, Zeile 17 - Zeile 20 *<br>--- | 1,2,5 | C10M159/24<br>C09D5/08<br>C23F11/16 |
| X | US-A-3 488 722 (N.L.ALLPHIN JR.)<br>* Spalte 2, Zeile 40 - Spalte 4, Zeile 18;<br>Ansprüche 1,7,18 *<br>--- | 1-3 | |
| X | EP-A-0 275 395 (AMOCO CORP.)<br>* Seite 5, Zeile 16 - Seite 6, Zeile 30 *<br>* Seite 6-7; Anspruch 1; Beispiele 1,4 *<br>--- | 1,2,5 | |
| X | GB-A-1 037 241 (LUBRIZOL)<br>* Seite 2, Spalte 1 - Spalte 79 *<br>* Seite 3, Zeile 19 - Zeile 103 *<br>* Seite 1, Zeile 11 - Zeile 33; Ansprüche 1,3,4<br>*<br>--- | 1-3,5 | |
| X | GB-A-2 181 151 (ELF FRANCE)<br>* Ansprüche 1,13-19 *<br>--- | 1-4 | RECHERCHIERTE SACHGEBIETE (Int. Cl.5 ) |
| X | EP-A-0 347 104 (BP)<br>* Seite 2, Zeile 41 - Seite 4, Zeile 27;<br>Ansprüche 1,10 *<br>----- | 1-4 | C10M |

Der vorliegende Recherchenbericht wurde für alle Patentansprüche erstellt

| Recherchenort | Abschlußdatum der Recherche | Prüfer |
|---|---|---|
| DEN HAAG | 21 FEBRUAR 1992 | ROTSAERT L.D.C. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
   Dokument

EPO FORM 1503 03.82 (P0403)